# EUROPEAN PATENT SPECIFICATION

(11) **EP 2 978 637 B1**
(45) Date of publication and mention of the grant of the patent: **16.05.2018**
(21) Application number: 14712662.7
(22) Date of filing: 25.03.2014
(51) Int. Cl.: B60R 9/04

(54) **ROOF RAIL SYSTEM**
DACHSCHIENENSYSTEM
SYSTÈME DE BRANCARD DE TOIT

(30) Priority: 26.03.2013 GB 201305518
(43) Date of publication of application: 03.02.2016
(73) Proprietor: Jaguar Land Rover Limited, Coventry, Warwickshire CV3 4LF (GB)
(72) Inventor: PARACK, Mudassir, Coventry Warwickshire CV3 4LF (GB)
(74) Representative: Hopley, Joanne Selina
(86) International application number: PCT/EP2014/055961
(87) International publication number: WO 2014/154688

(56) References cited:
- DE-U1-202007 001 742
- JP-A- H10 250 490
- US-A- 4 341 332
- US-A- 5 732 863
- US-B1- 6 267 281

## Description

### TECHNICAL FIELD

This invention relates to a vehicle and a roof rail system for a vehicle. Aspects of the invention relate to a system, to a method and to a vehicle.

### BACKGROUND

Roof rail systems are a useful addition on many vehicles. A typical roof rail system comprises at least two parallel rails which are located on the sides of the roof of the vehicle and aligned parallel to the length of the vehicle. One or more supporting members (such as roof bars) may be connected to the rails so that they extend across the vehicle. A rack or box can typically be secured to the supporting members. Possibly, a supporting member may itself comprise a box or container connected direct to the rail system. Items such as roof-boxes, bicycles, ski equipment, luggage and other supplies can then be fastened to, or contained within, the supporting member(s), significantly increasing the carrying capacity of the vehicle.

However, such rails must rise above the roof of the vehicle, in order that the support member can be secured, and as such rails affect the appearance and visual appeal of the vehicle, as well as having an effect upon the aerodynamics of the vehicle. For this reason, a user who does not have a use for the roof rail system may not wish to have rails fitted to the roof of their vehicle at all.

Some roof rail systems are designed to be detachable, such that they can be added to or removed from the vehicle as desired. However it is desirable to be able to attach such rails without major work upon the vehicle, so that a fitting can be done quickly and simply. In particular, it is desirable to avoid removing the upholstery from ceiling inside the vehicle, since this is difficult and risks damaging the upholstery.

Therefore, detachable systems have been designed which can be attached from the outside of the vehicle. For example, the roof rail system may be bolted to the roof using anchor points located in a channel in the roof. US6267281 B1 discloses a roof rail system which consists of a side rail which engages with a roof channel. However such systems are often awkward to install, since they require bolts to be fastened in tight spaces with poor access, such as within the roof channel itself. This is done to hide the bolts from view, and so preserve a better appearance for the vehicle.

Alternatively, some rail systems comprise "end caps", which are removable pieces at the end of each rail which can be used to hide any bolts from view. However, the end caps are always visibly separate from the rail to which they are attached, since the join is visible. This is considered to be ugly by many consumers, and hence is undesirable on premium vehicles. Caps are also vulnerable to being knocked off, especially when fitting a roof rack or box, or when loading heavy goods onto the roof of the vehicle.

DE 20 2007 001 742 U1 discloses a roof support assembly in which a roof rail is anchored to the vehicle roof using support members that are fastened to the roof from above, and a decorative trim is subsequently also applied from above.

US 5 732 863 discloses a roof support assembly in which an inner side rail and an outer trim rail are each affixed to a centre support and the assembly is fastened to the roof from above by screw means.

As such, a roof rail system which can be easily fitted but which still preserves a premium appearance would be desirable.

### SUMMARY OF THE INVENTION

In accordance with an aspect of the present invention there is provided a roof rail system for a vehicle. as defined in claim 1. In this way, the invention provides a roof rail system which can be fitted to the roof of a vehicle and still provide a desirable appearance. In particular, the brackets are hidden by the cover and the rail, protecting them from damage while the good appearance of the rail system is preserved since no bolts or other necessary but ugly fixing components are visible. Typically, the rail comprises a first lip, at top edge of the first cover member being located alongside the first lip. Typically, the lip runs along the length of an inner curve of the rail.

Locating the cover against the first lip hides the edge of the cover, and helps to maintain a premium appearance in the roof rail.

The upstanding flange is covered in that it is hidden from external view. In a typical embodiment, with respect to the vehicle front and back, views of the flange are hidden by rail bends, while the top view and one side view are hidden by the rail. A further side view is hidden by the first cover, and a view from beneath is hidden by the roof of the vehicle.

It may be that the first cover member is retained at least in part by the first lip.

Typically, the roof rail system comprises at least one locating member, the locating member being positioned so as to urge the first cover member against the first lip. This will help to keep rain water and other environmental factors out of the roof rail system. It also prevents a visible gap from developing between the cover and the lip, which might spoil the appearance of the roof rail system. It may be that the rail comprises a locating member. It may be that the roof comprises a locating member. It may be that the first cover member comprises a locating member. Any combination of these components may comprise locating members. It may be that the rail, the roof or the first cover member comprise a first locating member, while a second cover member comprises a second locating member, the first locating member being arranged to abut against the second locating member and so urge the first cover member against the first lip.

Typically, the rail comprises at least one first indentation, a portion of the first cover member being located within the first indentation.

It may be that the roof comprises a second lip, the first cover member being located against the second lip. It may be that the first and second lips form a substantially continuous lip. Where the roof comprises a second lip, it may be that the first cover member is retained at least in part by the second lip. It may further be that the roof rail system comprises at least one locating member, the locating member being positioned so as to urge the first cover member against the second lip. The roof rail system may comprise separate locating members for urging the first cover member against the first lip and for urging the first cover member against the second lip. Alternatively, a locating member may urge the first cover member against both the first and second lips.

Typically, the vehicle comprises a roof ditch, the location points on the roof of the vehicle being located within the roof ditch. In such an embodiment it may be that the roof rail system further comprises a ditch cover member adapted to cover the ditch when the roof rail system is in use. It may further be that a portion of the first cover member is located within the roof ditch. It may be that the ditch cover member comprises a locating member. It may be that the ditch cover member comprises a second lip. It may be that a bottom edge of the first cover member is located on the ditch cover member.

It may be that the roof rail system further comprises at least one clip system, the clip system securing the first cover member with respect to the rail.

Where the roof rail system comprises a locating member, the locating member may comprise the clip.

It may be that the clip system comprises a first clip on the cover and a second clip on the rail, which clip system snaps into engagement by said movement of the first cover member relative to the roof rail in a direction transverse said longitudinal direction.

It may be that said roof rail and first cover member further comprise locating members which abut one another on said movement of the first cover member relative to the roof rail in a direction transverse said longitudinal direction to lever said top edge into engagement with said lip.

It may be that, on said movement of the first cover member relative to the roof rail in a direction transverse said longitudinal direction, said bottom edge is levered into engagement with said ditch cover member.

The longitudinal direction is one substantially parallel to the rail. Typically the rail is an elongate shape, the majority of whose surface area comprises a plurality of substantially parallel surfaces, the longitudinal direction being defined with respect to these surfaces.

It may be that connection of the first cover member to the roof rail is by movement of the first cover member relative to the roof rail in a direction orthogonal to the roof rail.

It may be that the rail and the roof define at least a plurality of apertures, each aperture being substantially covered by the first cover member.

The bracket may be affixed to the location points using bolts, welding, chemical adhesion or any other suitable method.

According to a further aspect of the invention, there is provided a method of installing a roof rail system on a vehicle, as defined in claim 12. According to a still further aspect of the invention, there is provided a vehicle comprising a roof rail system as described above. The vehicle may comprise at least two of said brackets spaced along the roof, said first cover member, when fitted, covering both of said brackets, and covering any gap between the roof and rail.

### BRIEF DESCRIPTION OF THE DRAWINGS

One or more embodiments of the invention are further described hereinafter, by way of example only, with reference to the accompanying drawings, in which:
Figures 1 shows a vehicle roof and a roof rail system according to an embodiment of the invention;
Figures 2, 3 and 4 show the process of installing a roof rail system as shown in Figure 1; and
Figures 5, 6 and 7 show cross sections through the roof rail system shown in Figure 1.

### DETAILED DESCRIPTION

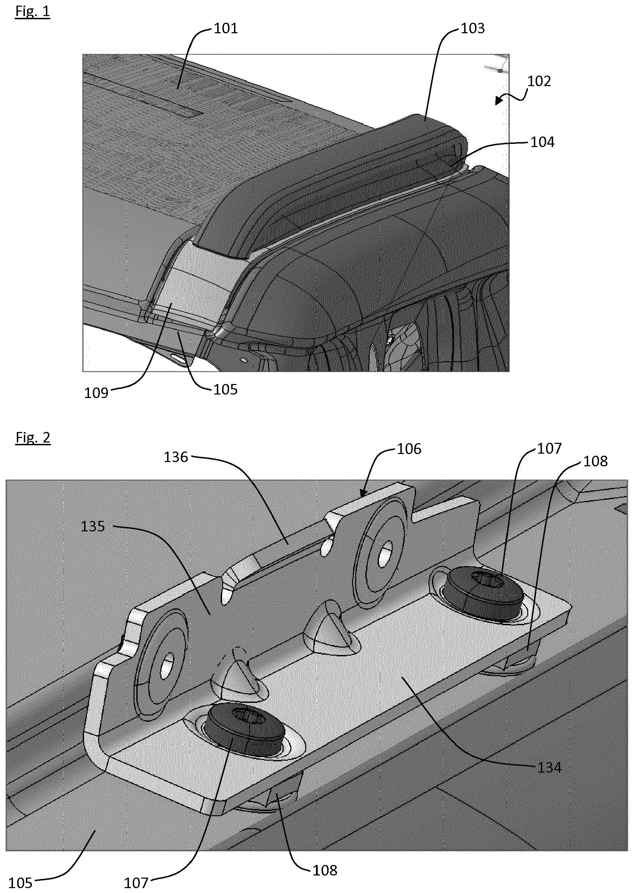

Figure 1 shows a section of a roof 101 of a vehicle which comprises a roof rail system 102 according to the invention. The roof rail system comprises a rail 103 and a first cover member 104 which are fitted to the roof 101.

The roof 101 of the vehicle comprises a ditch 105, which is an elongate intrusion set into the surface of the roof. If the vehicle is not fitted with a roof rail system 102, then the ditch 105 is provided with a first ditch finisher (not shown). A ditch finisher is an elongate member which fits into and covers the ditch 105 so as to provide the roof 101 of the vehicle with a smooth profile. When the roof rail system 102 is installed, the first ditch finisher is removed in order to access the ditch 105. A bracket 106 (three of them in each ditch of the embodiment illustrated) is then installed in the ditch, as shown in Figure 2. The bracket 106 comprises a base 134, an upstanding flange 135 and an upper portion 136. The bracket is secured within the ditch using roof bolts 107. The ditch includes roof fixing adaptors 108 which are securely attached to the roof. A further fixing part (not shown) may be provided under the roof to retain the fixing adapter 108 in place. Each roof bolt 107 is fastened into a roof fixing adapter 108 to secure the bracket to the roof 101. Vehicles may be provided to customers with the roof fixing adaptors 108 already fitted, so that fixing of a roof rail does not need to involve access to the inside of the roof 101 through the head liner.

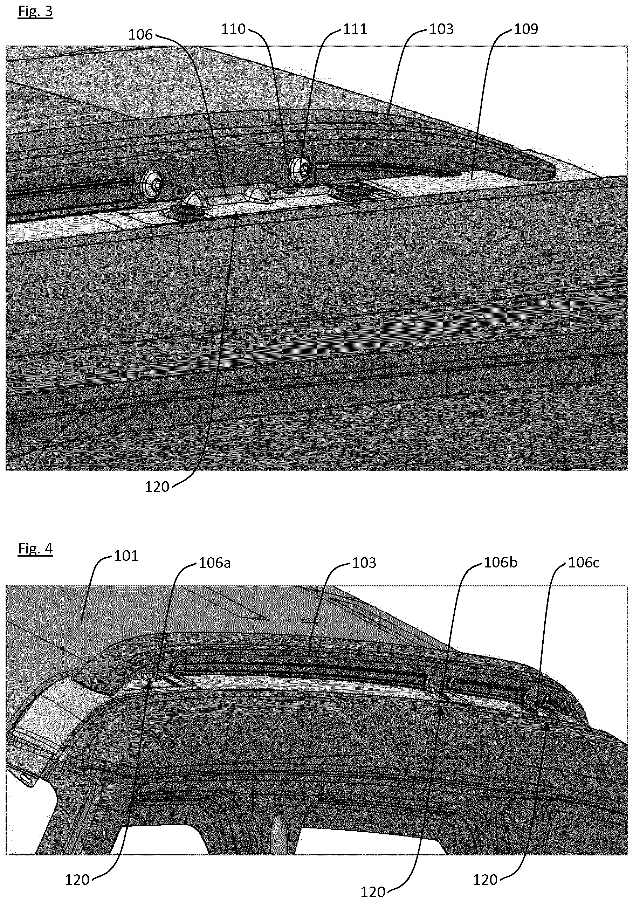

As mentioned, three brackets 106 may be installed. Then, a second, different ditch finisher 109 (also referred to as a second cover member) is installed, and the rail 103 is fitted to the brackets as shown in Figure 3. The second ditch finisher 109 comprises holes 120 which fit around the brackets 106 and through which at least the upstanding flanges 135 protrude. The rail 103 comprises anchor points 110 which can be fastened to the brackets 106 using rail bolts 111. The second cover member may be retained in position by the ends of the rail 103 and/or by clips (not shown).

Figure 4 shows the full extent of the ditch finisher 109 and the rail 103 as fitted on the roof 101. The rail 103 is retained by three brackets 106, a front bracket 106a, a centre bracket 106b and a rear bracket 106c.

Once the rail 103 is attached to the roof 101, the first cover member 104 is fitted as shown in figure 1. The rail 103 and the roof 101 define a space which contains the brackets 106. The cover 104 substantially covers this space.

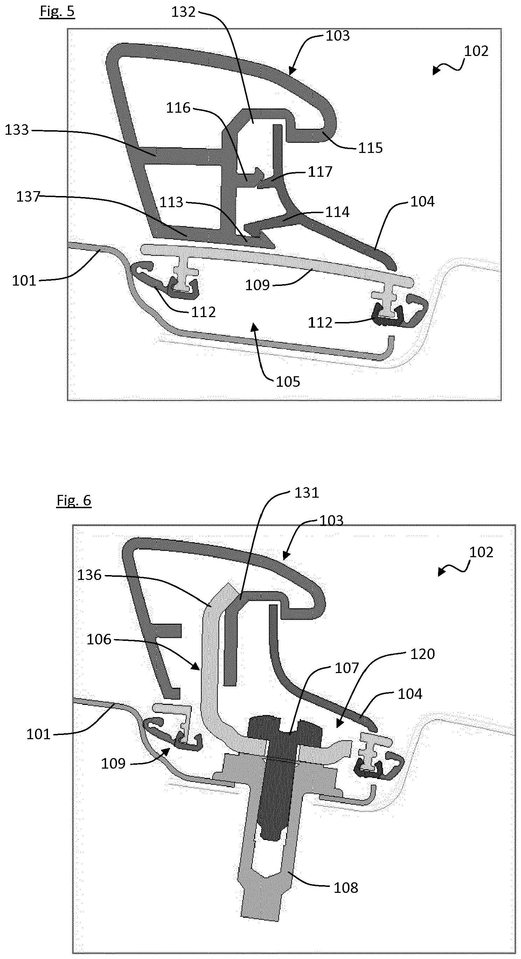

Figure 5 shows a first cross section through the roof rail system 102, showing the rail 103, the cover 104 and the second ditch finisher 109. The second ditch finisher 109 comprises deformable feet 112 which are made of rubber or similar elastomeric material. The feet 112 fit snugly against the sides of the ditch 105 and help to prevent rain water collecting beneath the second ditch finisher 109.

The rail 103 comprises a first clip 113. The cover 104 comprises a second clip 114. When the cover 104 is fitted to the rail 103, the two clips 113, 114 are pushed together and deform, allowing the two clips to slide past one another. The two clips 113, 114 then snap into engagement as shown in Figure 5, retaining the cover 104 in place with respect to the rail 103.

The rail 103 further comprises a lip 115 and a first locating member 116. The lip 115 runs for most of the length of the rail 103, along the top of the space formed between the rail 103 and the roof 101. The lip therefore defines an indentation 132 in the rail in which a top edge of the cover 104 is received. The cover 104 comprises a second locating member 117. The rail 103 and the cover 104 are shaped such that, when the two clips 113, 114 are engaged, the first locating member 116 abuts against the second locating member 117. This tends to urge the cover 104 towards the lip 115 of the rail 103. The cover 104 is made from a flexible plastics material, and as such it tends to bend outwards slightly, urging the upper portion of the cover 104 against the inner surface of the lip 115. At the same time, the leverage imposed by tension in the clip 114 engaged with the clip 113 of the rail, and the fulcrum formed by the interengaging locating members 116,117, presses a bottom edge of the first cover member 104 against the top of the second ditch finisher 109. Thus the cover 104 smoothly blends the roof 101 and the ditch finisher 109 into the rail 103 so that to all appearances the roof rail is, at least in shape, an extension of the roof, providing a clean and uncluttered appearance different from traditional roof rails that tend to be upstanding and separate from (but obviously connected to) the roof.

Advantageously, the rail 103 is a simple elongate shape which can be easily produced using extrusion methods, with holes machined into the rail for fixings as appropriate once the rail 103 is extruded. The cover 104 is also a simple shape, and can be easily manufactured using injection moulding methods.

The rail 103 may also comprise a cross piece 133 and a floor 137 which structurally support the rail and helps to prevent buckling. The floor 137 may also seat on and (further) retain the second ditch finisher 109.

Figure 6 shows a further cross section through the rail system 102, this time at a point which includes a bracket 106, a roof bolt 107 and a roof fixing adapter 108. As can be seen, part of the floor 137 and clip 113, as well as part of the cross piece 133 of the rail 103, is cut away at this point to accommodate the bracket 106. Similarly, the second ditch finisher 109 here comprises a hole 120 for the bracket 106 to extend through. The roof bolt 107 is fastened through the bracket into the roof fixing adapter 108, which is itself fastened into the roof. Advantageously, as described above, bracket 106 and the roof bolt 107 is attached before the rail 103 is put in place. This provides the person installing the roof rail system with easy access to place and fasten the roof bolt 107, without obstruction from the rail 103.

However, as can be seen in Figure 6, once the rail and the cover are in place, the bracket 106 is hidden from view by the rail 106 and the cover 104. In particular, since the cover 104 appears to be part of the rail, and since both the cover 104 and the rail 103 rest against the ditch finisher 109, the rail 103 appears substantially flush with the roof 101.

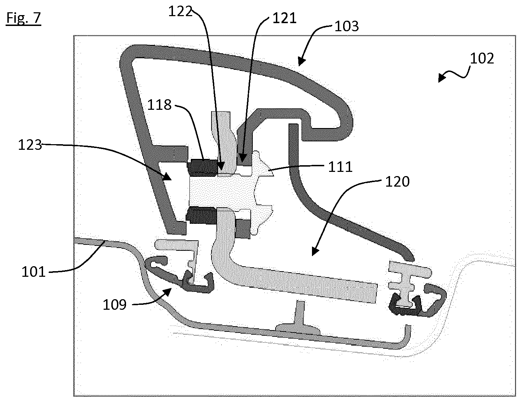

Figure 7 shows a still further cross section through the rail system 102, this time at a point which includes a bracket 106 and a rail bolt 111. The rail bolt 111 passes through a hole 121 which has been machined into the rail 103, and a further hole 122 in the bracket. A threaded rail fixing adapter 118 is fixed at the rear of the bracket behind the hole 122 and is engaged by the bolt 111, such that the rail 103 is retained against the bracket 106. The rail bolt 111 is attached before the cover 104 is put in place. This provides the person installing the roof rail system with easy access to place and fasten the rail bolt 111, without obstruction from the cover 104. The cover 104 then hides the bolts 111, and indeed the entire bracket 106 and the holes 120 in the second ditch cover 109. The lip 115 of the rail 103 serves to hide the top of the cover 104, such that there is no discernible gap between the cover 104 and the rail 103. This provides a premium appearance for the vehicle, since the cover 104 and the rail 103 appear to be a single piece. The lip 115 also hides the exact location of the top of the cover 104, such that the top of the cover can move by several millimetres without spoiling the appearance of the system 102. The rail therefore has a tolerance of several millimetres in both its alignment and its exact dimensions.

Returning to figure 2, the bracket 106 also comprises an upper portion 136. As is shown in Figure 6, the upper portion 136 of the bracket 106 abuts with an inner surface 131 of the rail 103. The upper portion 136 of the bracket 106 therefore assists in retaining the rail 103 in position. For example, when a load is attached to the rail 103, and the vehicle is driven over a bump, the load tends to rise up relative to the vehicle, exerting an upwards pull on the rail 103. This pull is resisted by the upper portion 136 of the bracket 106, helping to retain the rail 103 in position. The inclined upper portion 136 requires that initial fitting of the rail over the upstanding flange 135 of the bracket 106 involves rotating (in an anti-clockwise direction when referring to Figure 6) the rail from a slightly inclined start position to its final vertical position shown in Figure 6. This enables the bottom edge of the cut-out floor 137 to clear the retainer 118 (which ultimately is located in a channel 123 formed by the cut-out between the cross piece 133 and floor 137) and so that the inner surface 131 can engage under the correspondingly inclined upper portion 136.

The embodiment above comprises a first locating member 116 and a second locating member 117 which are located on the roof rail 103 and the cover 104 respectively. In an alternative embodiment, there may be no second locating member 117, and the first locating member 116 may be longer so that it abuts the inner surface of the cover 104. In a further embodiment there may be no first locating member 116, and the second locating member 117 may be longer so that it abuts a surface of the roof rail 103. In a still further alternative embodiment, the ditch finisher 109 may comprise a first locating member which extends upwards from the ditch finisher, through a hole provided in a rail 103, and abuts either with a second locating member 117 or the inner surface of the cover 104.

In the embodiment above, the positioning of the clips 113, 114 and the locating members 116, 117 urges the upper portion of the cover 104 against the inner surface of the lip 115 and, in addition, also causes the bottom edge of the first cover member 104 to be pressed against the top of the second ditch finisher 109. The skilled man would understand that only one of the upper edge and the lower edge need be urged into contact with either the lip or the ditch finisher, respectively.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A roof rail system (102) for a vehicle, the roof rail system comprising:
at least one bracket (106), the bracket being suitable for attachment to location points on the roof of a vehicle;
a roof rail (103), for connection to the bracket and having a longitudinal direction; and
a first cover member (104), for connection to the roof rail once the roof rail is connected to the bracket, **characterised in that**
the bracket has an upstanding flange (135) for connection to the roof rail, and the roof rail and first cover member, when the roof rail is connected to the upstanding flange and when the first cover member is connected to the roof rail, cover the upstanding flange and the connection of the flange and the roof rail, and
connection of the first cover member to the roof rail is by movement of the first cover member relative to the roof rail in a direction transverse said longitudinal direction, once the roof rail is connected to the bracket.

2. A roof rail system as claimed in claim 1, wherein the rail comprises a first lip (115), a top edge of the first cover member (104) being located alongside the first lip.

3. A roof rail system as claimed in claim 2, wherein the first cover member (104) is retained at least in part by the first lip (115).

4. A roof rail system as claimed in claim 2 or claim 3, comprising at least one locating member (116), the locating member being positioned so as to urge the first cover member (104) against the first lip (115).

5. A roof rail system as claimed in any preceding claim, for use with a vehicle which comprises a roof ditch (105) and the location points on the roof of the vehicle are located within the roof ditch, wherein the roof rail system further comprises a ditch cover member (109) adapted to cover the ditch when the roof rail system is in use.

6. A roof rail system as claimed in claim 5, wherein a bottom edge of the first cover member (104) is located on the ditch cover member (109).

7. A roof rail system as claimed in any preceding claim, wherein the roof rail system further comprises at least one clip system (113, 114), the clip system securing the first cover member with respect to the rail.

8. A roof rail system as claimed in claim 7, wherein the clip system comprises a first clip (114) on the cover (104) and a second clip (113) on the rail (103), which clip system snaps into engagement by said movement of the first cover member (104) relative to the roof rail (103) in a direction transverse said longitudinal direction.

9. A roof rail system as claimed in claims 2 and 8, wherein said roof rail (103) and first cover member (104) further comprise locating members (116, 117) which abut one another on said movement of the first cover member relative to the roof rail in a direction transverse said longitudinal direction to lever said top edge into engagement with said lip.

10. A roof rail system as claimed in claims 6 and 9, wherein, on said movement of the first cover member (104) relative to the roof rail in a direction transverse said longitudinal direction, said bottom edge is levered into engagement with said ditch cover member (109).

11. A roof rail system as claimed in any preceding claim, wherein the longitudinal direction is parallel to the rail and wherein said transverse direction is substantially orthogonal to the roof rail.

12. A method of installing a roof rail system (102) on a vehicle, the method comprising the steps:
providing a roof rail system according to any preceding claim;
affixing the at least one bracket (106) to the roof;
affixing the rail (103) to the upstanding flange (135) of the at least one bracket (106); and,
once the rail is connected to the flange, connecting the first cover member (104) to the roof rail by movement of the first cover member relative to the roof rail in a direction transverse the longitudinal direction of the roof rail.

13. A vehicle comprising a roof rail system (102) according to any of claims 1 to 11.

14. A vehicle as claimed in claim 13 comprising at least two of said brackets (106) spaced along the roof, said first cover member (104), when fitted, covering both of said brackets, and covering any gap between the roof and rail (103).

## Patentansprüche

1. Dachschienensystem (102) für ein Fahrzeug, wobei das Dachschienensystem Folgendes umfasst:
wenigstens einen Halter (106), wobei der Halter zum Befestigen an Aufnahmepunkten auf dem Dach eines Fahrzeugs geeignet ist;
eine Dachschiene (103) zum Verbinden mit dem Halter und eine Längsrichtung aufweisend; und ein erstes Abdeckungselement (104) zum Verbinden mit der Dachschiene, sobald die Dachschiene mit dem Halter verbunden ist, **dadurch gekennzeichnet, dass**
der Halter einen aufrechten Flansch (135) zum Verbinden mit der Dachschiene aufweist und die Dachschiene und das erste Abdeckungselement den aufrechten Flansch und die Verbindung des Flanschs und der Dachschiene abdecken, wenn die Dachschiene mit dem aufrechten Flansch verbunden ist und wenn das erste Abdeckungselement mit der Dachschiene verbunden ist, und
ein Verbinden des ersten Abdeckungselements mit der Dachschiene durch Bewegen des ersten Abdeckungselements in Bezug zu der Dachschiene in einer Richtung schräg zu der Längsrichtung erfolgt, sobald die Dachschiene mit dem Halter verbunden ist.

2. Dachschienensystem nach Anspruch 1, wobei die Schiene einen ersten Rand (115) umfasst, wobei eine Oberkante des ersten Abdeckungselements (104) entlang des ersten Rands gelegen ist.

3. Dachschienensystem nach Anspruch 2, wobei das erste Abdeckungselement (104) wenigstens zum Teil durch den ersten Rand (115) gehalten wird.

4. Dachschienensystem nach Anspruch 2 oder 3, wenigstens ein Aufnahmeelement (116) umfassend, wobei das Aufnahmeelement angeordnet ist, um das erste Abdeckungselement (104) gegen den ersten Rand (115) zu drängen.

5. Dachschienensystem nach einem vorhergehenden Anspruch zur Verwendung mit einem Fahrzeug, das einen Dachgraben (105) umfasst und die Aufnahmepunkte auf dem Dach des Fahrzeugs innerhalb des Dachgrabens angeordnet sind, wobei das Dachschienensystem ferner ein Grabenabdeckungselement (109) umfasst, das angepasst ist, den Graben abzudecken, wenn das Dachschienensystem verwendet wird.

6. Dachschienensystem nach Anspruch 5, wobei eine Unterkante des ersten Abdeckungselements (104) auf dem Grabenabdeckungselement (109) gelegen ist.

7. Dachschienensystem nach einem vorhergehenden Anspruch, wobei das Dachschienensystem ferner wenigstens ein Klemmsystem (113, 114) umfasst, wobei das Klemmsystem das erste Abdeckungselement mit Bezug zu der Schiene sichert.

8. Dachschienensystem nach Anspruch 7, wobei das Klemmsystem eine erste Klemme (114) auf der Abdeckung (104) und eine zweite Klemme (113) auf der Schiene (103) umfasst, wobei das Klemmsystem durch das Bewegen des ersten Abdeckungselements (104) in Bezug zu der Dachschiene (103) in einer Richtung schräg zu der Längsrichtung in Eingriff einrastet.

9. Dachschienensystem nach Anspruch 2 und 8, wobei die Dachschiene (103) und das erste Abdeckungselement (104) ferner Aufnahmeelemente (116, 117) umfassen, die bei dem Bewegen des ersten Abdeckungselements in Bezug zu der Dachschiene in einer Richtung schräg zu der Längsrichtung aneinanderstoßen, um die Oberkante mittels eines Hebels in Eingriff mit dem Rand zu bewegen.

10. Dachschienensystem nach Anspruch 6 und 9, wobei bei dem Bewegen des ersten Abdeckungselements (104) in Bezug zu der Dachschiene in einer Richtung schräg zu der Längsrichtung die Unterkante mittels eines Hebels in Eingriff mit dem Grabenabdeckungselement (109) bewegt wird.

11. Dachschienensystem nach einem vorhergehenden Anspruch, wobei die Längsrichtung parallel zur Schiene verläuft und wobei die schräge Richtung im Wesentlichen orthogonal zu der Dachschiene verläuft.

12. Verfahren zum Anbringen eines Dachschienensystems (102) auf einem Fahrzeug, wobei das Verfahren die folgenden Schritte umfasst:
Bereitstellen eines Dachschienensystems nach einem vorhergehenden Anspruch; Befestigen wenigstens eines Halters (106) an dem Dach;
Befestigen der Schiene (103) an dem aufrechten Flansch (135) des wenigstens einen Halters (106); und
sobald die Schiene mit dem Flansch verbunden ist, Verbinden des ersten Abdeckungselements (104) mit der Dachschiene durch Bewegen des ersten Abdeckungselements in Bezug zu der Dachschiene in einer Richtung schräg zu der Längsrichtung der Dachschiene.

13. Fahrzeug, ein Dachschienensystem (102) nach einem der Ansprüche 1 bis 11 umfassend.

14. Fahrzeug nach Anspruch 13, wenigstens zwei der Halter (106), die entlang des Dachs beabstandet sind, umfassend, wobei das erste Abdeckungselement (104), wenn angebracht, beide Halter abdeckt und jegliche Lücke zwischen dem Dach und der Schiene (103) abdeckt.

## Revendications

1. Système de brancard de toit (102) pour un véhicule, le système de brancard de toit comprenant :
au moins un support (106), le support étant adapté pour être fixé à des points de localisation sur le toit d'un véhicule ;
un brancard de toit (103), pour un raccordement au support et ayant une direction longitudinale ; et
un premier organe de couvercle (104), pour un raccordement au brancard de toit une fois que le brancard de toit est raccordé au support, **caractérisé en ce que**
le support a une bride à la verticale (135) pour un raccordement au brancard de toit, et le brancard de toit et le premier organe de couvercle, lorsque le brancard de toit est raccordé à la bride à la verticale et lorsque le premier organe de couvercle est raccordé au brancard de toit, couvrent la bride à la verticale et le raccordement de la bride et du brancard de toit, et
un raccordement du premier organe de couvercle avec le brancard de toit se fait par déplacement du premier organe de couvercle par rapport au brancard de toit dans une direction transversale à ladite direction longitudinale, une fois que le brancard de toit est raccordé au support.

2. Système de brancard de toit selon la revendication 1, dans lequel le brancard comprend une première lèvre (115), un bord supérieur du premier organe de couvercle (104) étant situé le long de la première lèvre.

3. Système de brancard de toit selon la revendication 2, dans lequel le premier organe de couvercle (104) est retenu au moins en partie par la première lèvre (115).

4. Système de brancard de toit selon la revendication 2 ou la revendication 3, comprenant au moins un organe de localisation (116), l'organe de localisation étant positionné de façon à pousser le premier organe de couvercle (104) contre la première lèvre (115).

5. Système de brancard de toit selon l'une quelconque des revendications précédentes, pour son utilisation avec un véhicule qui comprend une rigole de toit (105) et les points de localisation sur le toit du véhicule sont situés au sein de la rigole de toit, dans lequel le système de brancard de toit comprend en outre un organe de couvercle de rigole (109) adapté pour couvrir la rigole lorsque le système de brancard de toit est en utilisation.

6. Système de brancard de toit selon la revendication 5, dans lequel un bord inférieur du premier organe de couvercle (104) est situé sur l'organe de couvercle de rigole (109).

7. Système de brancard de toit selon l'une quelconque des revendications précédentes, dans lequel le système de brancard de toit comprend en outre au moins un système de pinces (113, 114), le système de pinces arrimant le premier élément couvrant par rapport au brancard.

8. Système de brancard de toit selon la revendication 7, dans lequel le système de pinces comprend une première pince (114) sur le couvercle (104) et une seconde pince (113) sur le brancard (103), lequel système de pinces s'emboîte en enclenchement par ledit déplacement du premier organe de couvercle (104) par rapport au brancard de toit (103) dans une direction transversale à ladite direction longitudinale.

9. Système de brancard de toit selon les revendications 2 et 8, dans lequel ledit brancard de toit (103) et ledit premier organe de couvercle (104) comprennent en outre des organes de localisation (116, 117) qui butent les uns contre les autres lors dudit déplacement du premier organe de couvercle par rapport au brancard de toit dans une direction transversale à ladite direction longitudinale pour pousser par effet de levier ledit bord supérieur en enclenchement avec ladite lèvre.

10. Système de brancard de toit selon les revendications 6 et 9, dans lequel, lors dudit déplacement du premier organe de couvercle (104) par rapport au brancard de toit dans une direction transversale à ladite direction longitudinale, ledit bord inférieur est poussé par effet de levier en enclenchement avec ledit organe de couvercle de rigole (109).

11. Système de brancard de toit selon l'une quelconque des revendications précédentes, dans lequel la direction longitudinale est parallèle au brancard et dans lequel ladite direction transversale est sensiblement orthogonale au brancard de toit.

12. Procédé d'installation d'un système de brancard de toit (102) sur un véhicule, le procédé comprenant les étapes :
la fourniture d'un système de brancard de toit selon l'une quelconque des revendications précédentes ;
la fixation de l'au moins un support (106) au toit ;
la fixation du brancard (103) à la bride à la verticale (135) de l'au moins un support (106) ; et
une fois que le brancard est raccordé à la bride, le raccordement du premier organe de couvercle (104) au brancard de toit par déplacement du premier organe de couvercle par rapport au brancard de toit dans une direction transversale à la direction longitudinale du brancard de toit.

13. Véhicule comprenant un système de brancard de toit (102) selon l'une quelconque des revendications 1 à 11.

14. Véhicule selon la revendication 13, comprenant au moins deux desdits supports (106) espacés le long du toit, ledit premier organe de couvercle (104), lorsqu'il est installé, couvre lesdits deux supports, et couvrant tout écartement entre le toit et le brancard (103).
